**Europäisches Patentamt**

**European Patent Office**

**Office européen des brevets**

(19)

(11) Veröffentlichungsnummer: **0 113 741**
**B1**

(12) ## EUROPÄISCHE PATENTSCHRIFT

(45) Veröffentlichungstag der Patentschrift:
**10.12.86**

(51) Int. Cl.⁴: **B 29 C 47/00,** H 01 B 3/04

(21) Anmeldenummer: **83902232.4**

(22) Anmeldetag: **22.07.83**

(86) Internationale Anmeldenummer:
**PCT/AT 83/00022**

(87) Internationale Veröffentlichungsnummer:
**WO 84/00515 (16.02.84** Gazette 84/5)

(54) **VERFAHREN ZUM HERSTELLEN EINER ALS ELEKTROISOLIERMATERIAL GEEIGNETEN FOLIE, SOWIE VERWENDUNG DER FOLIE.**

(30) Priorität: **27.07.82 AT 2887/82**

(43) Veröffentlichungstag der Anmeldung:
**25.07.84 Patentblatt 84/30**

(45) Bekanntmachung des Hinweises auf die Patenterteilung:
**10.12.86 Patentblatt 86/50**

(84) Benannte Vertragsstaaten:
**AT BE CH DE FR GB LI NL SE**

(56) Entgegenhaltungen:
**DE - A - 1 629 421**
**DE - A - 1 933 281**
**DE - A - 2 006 680**
**DE - B - 1 257 915**
**GB - A - 935 439**
**GB - A - 991 517**
**GB - A - 1 286 114**
**GB - A - 2 055 680**
**US - A - 3 392 075**

(73) Patentinhaber: **ISOVOLTA Österreichische Isolierstoffwerke Aktiengesellschaft, Industriezentrum-Süd, A-2351 Wiener Neudorf (AT)**

(72) Erfinder: **DEUTSCHMANN, Gottfried, Augasse 16, A-8430 Leibnitz (AT)**
Erfinder: **GSELLMANN, Helmut, Liebiggasse 18, A-8010 Graz (AT)**

(74) Vertreter: **Stampfer, Heinz, ISOVOLTA Österreichische Isolierstoffwerke AG Industriezentrum-Süd, A-2351 Wiener Neudorf (AT)**

## Technisches Gebiet

Die Erfindung betrifft ein Verfahren zum kontinuierlichen Herstellen einer als Elektroisoliermaterial geeigneten Folie in Bahnenform, die eine zumindest im wesentlichen aus einem aushärtbaren Kunstharzgemisch und Glimmer bestehende, dünne Schicht aufweist, sowie die Verwendung der Folie.

## Stand der Technik

Zur Herstellung der elektrischen Isolationen von Spulen und Leiterstäben von elektrischen Hochleistungsmaschinen ist es bekannt, derartige Flächenisolierstoffe auf Feinglimmerbasis zu verwenden (GR-A-991 517). Diese Flächenisolierstoffe bestehen meist aus einem Trägermaterial, z. B. einem Glasfasergewebe oder einer temperaturbeständigen Kunststoffolie, welche mit einem mit thermohärtendem Kunstharz imprägnierten Feinglimmerpapier verbunden ist, wobei das Kunstharz als Bindemittel wirkt. Das in dem Flächenisolierstoff enthaltene Kunstharz befindet sich im B-Zustand.

Zur Herstellung der genannten elektrischen Isolationen werden diese Flächenisolierstoffe nun in Bandform oder als Breitware z. B. auf den zu isolierenden Leiterstab aufgebracht und dieser dann in einer beheizten Spulenpresse in seine endgültige Form gebracht und die Isolation dabei ausgehärtet.

Die Herstellung dieser bekannten Flächenisolierstoffe ist nun relativ aufwendig:

Zunächst wird das Feinglimmerpapier aus einem in geeigneter Weise aufgeschlossenen Glimmer hergestellt. Danach werden das Trägermaterial und das Feinglimmerpapier mit dem Kunstharz beaufschlagt und schliesslich durch Kalandrieren miteinander verbunden.

## Darstellung der Erfindung

Der Erfindung liegt nun die Aufgabe zugrunde, ein neues Verfahren zur Herstellung einer als Elektroisoliermaterial geeigneten Folie anzugeben, welche wie die oben genannten bekannten Flächenisolierstoffe ein aushärtbares Kunstharzgemisch und Glimmer enthält, wobei das neue Herstellungsverfahren aber wesentlich weniger aufwendig ist als das genannte bekannte Herstellungsverfahren.

Die der Erfindung zugrunde liegende Aufgabe wird in dem erfindungsgemässen Verfahren gelöst, das dadurch gekennzeichnet ist, dass man aus dem aushärtbaren Kunstharzgemisch und Glimmerpulver, vorteilhaft Elektroglimmerpulver, mit Hilfe eines Extruders, kontinuierlich einen pastösen Strang formt, der in einem Kalander oder einer Bandpresse unter Verminderung der Strangdicke in diese dünne Schicht überführt wird. Dabei ist das eingesetzte Elektroglimmerpulver vorteilhaft eines auf Basis von Muskovit oder Phlogopit.

In einer vorteilhaften Ausgestaltung des erfindungsgemässen Verfahrens enthält der pastöse Strang 35 bis 70 Gew.%, vorteilhaft jedoch 45 bis 65 Gew.% Glimmerpulver.

Gemäss einer anderen vorteilhaften Ausgestaltung des erfindungsgemässen Verfahrens enthält der pastöse Strang neben dem Glimmerpulver noch bis zu 20 Gew.% weitere Füll- und/oder Verstärkungsstoffe.

Nach einer weiteren vorteilhaften Ausgestaltung des erfindungsgemässen Verfahrens stellt man zur Formung des pastösen Stranges aus dem Kunstharzgemisch und den Füll- und/oder Verstärkungsstoffen zunächst ein Gemisch her, welches im Extruder in Richtung auf die Extruderdüse gefördert und in das innerhalb des Extruders eine Härtekomponente beigemischt wird. Dabei erfolgt die Herstellung des Gemisches aus dem Kunstharz und den Füll- und/oder Verstärkungsstoffen vorteilhaft im Extruder selbst.

In anderen vorteilhaften Ausgestaltungen des erfindungsgemässen Verfahrens wird bei der Herstellung des pastösen Stranges das Kunstharz in flüssigem und/oder lösungsmittelfreien Zustand eingesetzt.

Gemäss weiteren vorteilhaften Ausgestaltungen des erfindungsgemässen Verfahrens ist das eingesetzte aushärtbare Kunstharzgemisch eines auf Basis von Epoxydharz oder Polyesterharz oder Silikonharz.

In einer weiteren vorteilhaften Ausgestaltung des erfindungsgemässen Verfahrens wird der pastöse Strang dem Kalanderspalt oder dem Spalt der Bandpresse zwischen zwei zulaufenden Bahnen aus flächigem Material zugeführt. Dabei wird die im Kalander oder der Bandpresse aus dem pastösen Strang erzeugte bandförmige Schicht vorteilhaft mit zumindest einer der zulaufenden Bahnen aus flächigem Material bleibend verbunden oder man führt vorteilhaft dem Kalanderspalt oder dem Spalt der Bandpresse zwischen dem pastösen Strang und einer der Bahnen aus flächigem Material noch zusätzlich eine Fasergewebebahn zu, die mit der im Kalander oder der Bandpresse aus dem pastösen Strang erzeugten bandförmigen Schicht bleibend verbunden wird.

Die Erfindung umfasst ferner die Verwendung der durch das erfindungsgemässe Verfahren hergestellte Folie zur elektrischen Isolierung von Spulen elektrischer Maschinen, wobei das in der Folie enthaltende Kunstharzgemisch ausgehärtet wird.

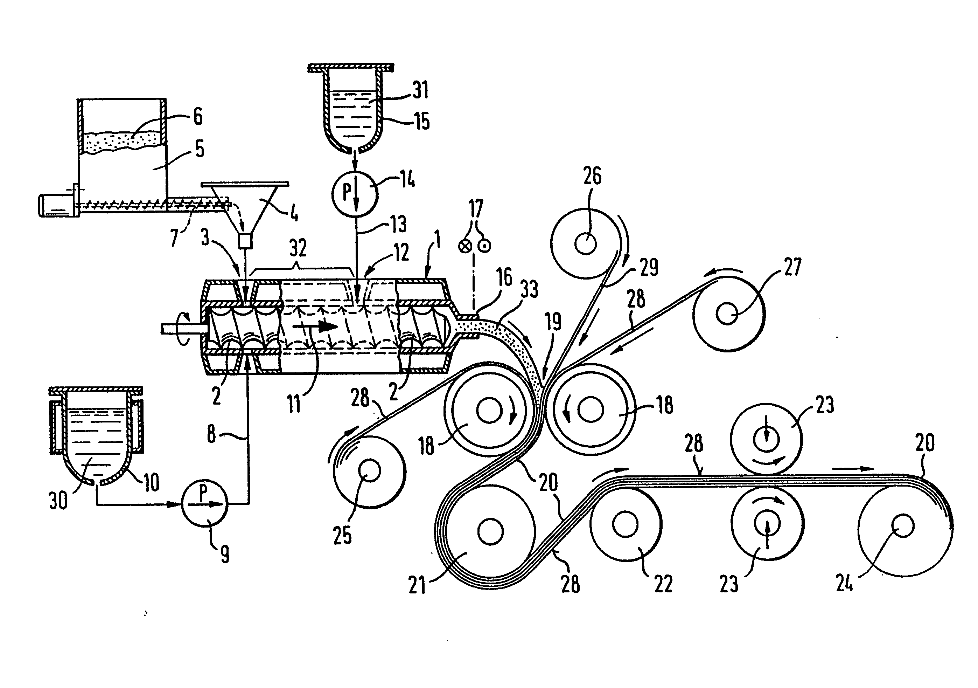

## Beschreibung der Zeichnung

Die Erfindung wird nachstehend anhand der Zeichnung, die in schematischer Darstellung eine Anlage zur Durchführung des erfindungsgemässen Verfahrens zeigt, eingehend erläutert.

Zentraler Teil der Anlage ist ein beheizbarer Doppelschneckenextruder 1 an dem in der Zeichnung nur eine der beiden Extruderschnecken 2 ersichtlich ist. Das Extrudergehäuse weist an einer ersten Einspeisestelle 3 einen Eingabetrichter 4 auf, in welchem aus einem Vorratsbehälter 5 Glimmerpulver 6 mittels einer Dosierspirale 7 eindosiert werden kann. Die Einspeisestelle 3 ist ausserdem über eine Rohrleitung 8 und eine Dosierpumpe 9 mit einem beheizbaren Vorratsgefäss 10 für das Kunstharz verbunden. Eine gegenüber der ersten Einspeisestelle 3 in Extruderförderrichtung 11 versetzte zweite Einspeisestelle 12 ist über die Rohrleitung 13 und eine Dosierpumpe 14 an ein Vorratsgefäss 15 für die Härterlösung angeschlossen. Der Extruder 1 weist eine Düse 16 zur Extrusion eines Rundstranges auf und ist an der Stelle der Düse 16 – wie durch 17 angedeutet – in Richtung senkrecht zur Zeichnungsebene oszillierend verschwenkbar.

Dem Extruder ist ein Kalander nachgeschaltet, mit einem Paar beheizbarer Kalanderwalzen 18, die einen Kalanderspalt 19 einschliessen, und mit einer Abzugsvorrichtung für das bandförmige Verfahrensprodukt 20 mit zwei Umlenkrollen 21 und 22, einem Abzugswalzenpaar 23 und einer Aufwickelvorrichtung 24. Zum Kalander gehören ferner Abrollvorrichtungen 25 bis 27, von denen dem Kalanderspalt 19 jeweils in Bandform Trennfolien 28 sowie ein Glasfasergewebe 29 zugeführt werden.

Bester Weg zur Ausführung der Erfindung

Für die Herstellung eines bandförmigen Flächenisolierstoffes einer Stärke von etwa 0,2 mm, bestehend aus einer ein thermohärtendes Epoxydharz und Glimmerpulver enthaltenden Schicht, die auf einer Oberflächenseite mit einer Glasfasergewebebahn verbunden ist, werden folgende Ausgangsstoffe eingesetzt.

1. Ein Glimmerpulver auf Muskovitbasis, bei dem etwa 50 Gew.% einer Korngrösse zwischen 0,08 und 0,10 mm und 50 Gew.% eine Korngrösse zwischen 1,5 und 1,8 mm aufweisen und das im Vorratsbehälter 5 bereitgestellt wird.

2. Ein Epoxydharz 30 bestehend aus 7 Gew. Teilen einer Harzkomponente mit einem Epoxydäquivalent von 200 und 3 Gew. Teilen einer Komponente mit Epoxydäquivalent von 420, wobei das Epoxydharz in dem beheizbaren Vorratsgefäss 10 geschmolzen wird.

3. Einen latenten Aminhärter 31, gelöst in einem sogenannten Reaktivverdünner, wie Diphenylglycidäther, Butandioldiglycidäther oder vorzugsweise auch einem niedrigviskosen cycloaliphatischen Epoxydharz, bereitgestellt im Vorratsgefäss 15.

4. Ein 0,04 mm starkes bahnenförmiges Glasfasergewebe 29.

5. 0,03 mm starke bandförmige Trennfolien 28 aus Polyäthylenterephthalat.

Im Extruder 1 wird ein pastöser Strang, bestehend aus einem Gemisch aus dem Glimmerpulver, dem Epoxydharz und dem Härter (Feststoffgehalt) im Verhältnis von 58 : 41 : 1 Gew. Teilen hergestellt. Dazu wird in der ersten Einspeisestelle 3 das Glimmerpulver 6 und das flüssige Epoxydharz 30 in den vorgesehenen Mengenverhältnissen kontinuierlich und gemeinsam eindosiert und wird in der ersten Mischzone 32 des Extruders in Förderrichtung transportiert und dabei innig vermischt. An der zweiten Einspeisestelle 12 wird dem Epoxydharz-Glimmerpulvergemisch die Härterlösung 31 zudosiert, so dass an der Düse 16 die Extruderschnecken 2 ein gleichförmiges Glimmerpulver-Epoxydharz-Härterlösungsgemisch fördern. Die Temperatur des Gemisches im Extruder wird über die gesamte Förderschneckenlänge auf etwa 100 °C gehalten und an der Düse 16 auf etwa 85 bis 90 °C abgesenkt. Durch oszillierendes Verschwenken des Extruders im Bereich der Düse 16 in Richtung senkrecht zur Zeichenebene wird das Material des aus der Düse 16 kontinuierlich austretenden pastösen Stranges 33 dem Kalanderspalt 19 über dessen gesamte Breite gleichmässig verteilt zugeführt. Die Zuführung des pastösen Stranges 33 in den Kalanderspalt erfolgt zwischen zwei von den Abrollvorrichtungen 25 und 27 zulaufenden Trennfolien 28. Zwischen einer der Trennfolien 28 und der im Kalander in eine bandförmige Schicht überzuführenden pastösen Strang 33 wird von der Abrollvorrichtung 26 die Glasfasergewebebahn 29 zugeführt.

Zwischen den beheizten Kalanderwalzen 18, die auf einer Temperatur von 75 °C gehalten werden, wird das Material des pastösen Stranges 33 kontinuierlich in eine dünne Schicht übergeführt, die sich mit der zulaufenden Glasfasergewebebahn 29 bleibend verbindet. Dabei werden in dieser Schicht auf Grund der Wirkung des Kalandrierens die plättchenförmigen Partikel des Glimmerpulvers in vorteilhafter Weise weitgehend parallel zur Schichtebene ausgerichtet.

Das aus dem Kalanderspalt austretende Verbundmaterial 20 wird nun über die Umlenkrollen 21 und 22 mit Hlfe des Abzugswalzenpaares 23 abgezogen und schliesslich bei 24 aufgerollt. Von dem Verbundmaterial 20 wird dann in einer besonderen Umwickelvorrichtung die an der Glasfasergewebebahn 29 anliegende Trennfolie 28 entfernt, wonach das Material, gegebenenfalls nach Aufschneiden in schmälere Wickelbänder als Flächenisolierstoff gebrauchsfertig ist.

Die Temperaturführung in der Behandlung des Glimmerpulver-Epoxydharz-Härtergemisches während des beschriebenen Verfahrens erfolgt so, dass das Kunstharz in den B-Zustand überführt wird, der latente Aminhärter aber noch nicht aktiviert wird.

Statt mit der Glasgewebebahn 29 kann die aus dem Glimmerpulver-Epoxydharz-Härtergemisch erzeugte dünne Schicht im Kalander auch mit anderen flächigen Materialien, insbesondere Trägermaterialien, wie Kunststoffolien, Kunstfasergeweben und dgl. verbunden werden.

Dem Glimmerpulver-Harzgemisch können noch andere Füll- und/oder Verstärkungsstoffe beigemengt werden. Solche Stoffe können z. B. Quarzpulver und/oder Kunststoffasern sein.

Das beschriebene Verfahren kann auch ganz allgemein vorteilhaft zur Herstellung von Folien eingesetzt werden, die neben einem aushärtbaren Kunstharzgemisch statt des Glimmerpulvers oder eines Teiles davon andere Füll- und/oder Verstärkungsstoffe, wie z. B. Russ, Eisenpulver, Verstärkungsfasern und dgl. enthalten sollen.

Gewerbliche Verwertbarkeit

Mit dem erfindungsgemässen Verfahren werden bei der Herstellung von Flächenisolierstoffen auf Feinglimmerbasis, die insbesondere zur elektrischen Isolierung von Spulen von elektrischen Maschinen dienen, völlig neue Wege beschritten.

Dabei wird der hohe Verfahrensaufwand, welcher mit der Herstellung der bisher eingesetzten Glimmerpapiere verbunden ist, vermieden. Ebenso vermieden werden die mit der Herstellung und der Imprägnierung des Glimmerpapiers verbundenen Entsorgungsprobleme. Der zur Durchführung des erfindungsgemässen Verfahrens erforderliche maschinentechnische Aufwand ist besonders niedrig.

**Patentansprüche**

1. Verfahren zum kontinuierlichen Herstellen einer als Elektroisoliermaterial geeigneten Folie in Bahnenform, die eine zumindest im wesentlichen aus einem härtbaren Kunstharzgemisch und Glimmer bestehende dünne Schicht aufweist, dadurch gekennzeichnet, dass man aus dem aushärtbaren Kunstharzgemisch und Glimmerpulver mit Hilfe eines Extruders kontinuierlich einen pastösen Strang (33) formt, der in einem Kalander oder einer Bandpresse unter Verminderung der Strangdicke in diese dünne Schicht übergeführt wird.

2. Verfahren nach Anspruch 1, dadurch gekennzeichnet, dass das eingesetzte Glimmerpulver ein Elektroglimmerpulver ist.

3. Verfahren nach Anspruch 2, dadurch gekennzeichnet, dass das eingesetzte Elektroglimmerpulver eines auf Basis von Muskovit oder Phlogopit ist.

4. Verfahren nach einem der Ansprüche 1 bis 3, dadurch gekennzeichnet, dass der pastöse Strang (33) 35 bis 70 Gew.%, vorteilhaft jedoch 45 bis 65 Gew.%, Glimmerpulver enthält.

5. Verfahren nach einem der Ansprüche 1 bis 4, dadurch gekennzeichnet, dass der pastöse Strang (33) neben dem Glimmerpulver noch bis zu 20 Gew.% weitere Füll- und/oder Verstärkungsstoffe enthält.

6. Verfahren nach Anspruch 5, dadurch gekennzeichnet, dass man zur Formung des pastösen Stranges (33) aus dem einzusetzenden Kunstharz (30) und dem Glimmerpulver und gegebenenfalls den anderen einzusetzenden Füll- und/oder Verstärkungsstoffen zunächst ein Gemisch herstellt, welches im Extruder (1) in Richtung auf die Extruderdüse (16) zu gefördert und in das innerhalb des Extruders (1) eine Härterkomponente (31) beigemischt wird.

7. Verfahren nach einem der Ansprüche 1 bis 6, dadurch gekennzeichnet, dass zur Formung des pastösen Stranges (33) das Kunstharz (30) in flüssigem Zustand eingesetzt wird.

8. Verfahren nach einem der Ansprüche 1 bis 7, dadurch gekennzeichnet, dass das eingesetzte Kunstharz (30) zumindest nahezu lösungsmittelfrei ist.

9. Verfahren nach einem der Ansprüche 1 bis 8, dadurch gekennzeichnet, dass das eingesetzte aushärtbare Kunstharzgemisch eines auf Basis von Epoxydharz ist.

10. Verfahren nach einem der Ansprüche 1 bis 8, dadurch gekennzeichnet, dass das eingesetzte Kunstharzgemisch eines auf Basis von Polyesterharz ist.

11. Verfahren nach einem der Ansprüche 1 bis 8, dadurch gekennzeichnet, dass das eingesetzte Kunstharzgemisch eines auf Basis von Silikonharz ist.

12. Verfahren nach einem der Ansprüche 1 bis 11, dadurch gekennzeichnet, dass der pastöse Strang (33) dem Kalanderspalt (19) oder dem Spalt der Bandpresse zwischen zwei zulaufenden Bahnen (28) aus flächigem Material zugeführt wird.

13. Verfahren nach Anspruch 12, dadurch gekennzeichnet, dass die im Kalander oder der Bandpresse aus dem pastösen Strang (33) erzeugte bandförmige Schicht mit zumindest einer der zulaufenden Bahnen aus flächigem Material bleibend verbunden wird.

14. Verfahren nach Anspruch 12, dadurch gekennzeichnet, dass man dem Kalanderspalt (19) oder dem Spalt der Bandpresse zwischen dem pastösen Strang und einer der Bahnen (28) aus flächigem Material noch zusätzlich eine Fasergewebebahn (29) zuführt, die mit der im Kalander oder der Bandprese aus dem pastösen Strang (33) erzeugten bandförmigen Schicht bleibend verbunden wird.

15. Verwendung einer Folie, hergestellt nach dem Verfahren gemäss einer der Ansprüche 1 bis 14, dadurch gekennzeichnet, dass man die Folie zur elektrischen Isolierung der Spulen von elektrischen Maschinen einsetzt, wobei das in der Folie enthaltene Kunstharzgemisch ausgehärtet wird.

**Claims**

1. Process for the continuous manufacture of a sheet in web form, which is suitable as electrical insulating material and which has a thin layer consisting at least essentially of a curable synthetic resin mixture and mica, characterized in that a pasty strand (33) is formed from the curable synthetic resin mixture and mica powder, and this strand is converted into this thin layer in a calender or a strip press, with reduction of the strand thickness.

2. Process according to Claim 1, characterized in that the mica powder used is an electrical-grade mica powder.

3. Process according to Claim 2, characterized in that the electrical-grade mica powder used is a powder based on muscovite or phlogopite.

4. Process according to one of Claims 1 to 3, characterized in that the pasty strand (33) contains 35 to 70% by weight, but advantageously 45 to 65% by weight, of mica powder.

5. Process according to one of Claims 1 to 4, characterized in that the pasty strand (33) also contains up to 20% by weight of further fillers and/or reinforcing materials, in addition to the mica powder.

6. Process according to Claim 5, characterized in that, for forming the pasty strand (33) from the synthetic resin (30) which is to be used and the mica powder and, if appropriate, the other fillers and/or reinforcing materials to be used, a mixture is prepared first, which is conveyed in the extruder (1) in the direction of the extruder die (16) and to which a curing agent component (31) is admixed within the extruder (1).

7. Process according to one of Claims 1 to 6, characterized in that, for forming the pasty strand (33), the synthetic resin (30) is used in the liquid state.

8. Process according to one of Claims 1 to 7, characterized in that the synthetic resin (30) used is at least substantially free of solvent.

9. Process according to one of Claims 1 to 8, characterized in that the curable synthetic resin mixture used is based on epoxide resin.

10. Process according to one of Claims 1 to 8, characterized in that the synthetic resin mixture used is based on polyester resin.

11. Process according to one of Claims 1 to 8, characterized in that the synthetic resin mixture used is based on silicone resin.

12. Process according to one of Claims 1 to 11, characterized in that the pasty strand (33) is fed to the calender nip (19) or the nip of the strip press between two webs (28) of two-dimensional material running in.

13. Process according to Claim 12, characterized in that the strip-like layer produced from the pasty strand (33) in the calender or the strip press is permanently bonded to at least one of the webs of two-dimensional material running in.

14. Process according to Claim 12, characterized in that additionally a fibre fabric web (29) is also fed to the calender nip (19) or the nip of the strip press between the pasty strand and one of the webs (28) of two-dimensional material, which fibre fabric web is permanently bonded to the strip-like layer produced in the calender or the strip press from the pasty strand (33).

15. Use of a sheet manufactured by the process according to one of Claims 1 to 14, characterized in that the sheet is employed for the electrical insulation of the coils of electrical machines, the synthetic resin mixture contained in the sheet being cured.

**Revendications**

1. Procédé de fabrication en continu d'une feuille en forme de bande utilisable comme matériau d'isolation électrique, qui présente une couche mince se composant au moins pour l'essentiel d'un mélange de résine synthétique durcissable et de mica, caractérisé en ce que l'on forme en continu à l'aide d'une extrudeuse un cordon pâteux (33) à partir du mélange de résine synthétique durcissable et de poudre de mica, qui est amené dans une calandre ou dans une presse à bande avec diminution de l'épaisseur du cordon pour obtenir cette couche mince.

2. Procédé selon la revendication 1, caractérisé en ce que la poudre de mica introduite est une poudre de mica de qualité électrique.

3. Procédé selon la revendication 2, caractérisé en ce que la poudre de mica de qualité électrique introduite est réalisée à base de muskovite ou de phlogopite.

4. Procédé selon l'une des revendications 1 à 3, caractérisé en ce que le cordon pâteux (33) contient de 35 à 70% en poids, avantageusement de 45 à 65% en poids, de poudre de mica.

5. Procédé selon l'une des revendications 1 à 4, caractérisé en ce que le cordon pâteux (33) contient, en plus de la poudre de mica, encore jusqu'à 20% en poids d'un matériau complémentaire de charge et/ou de renforcement.

6. Procédé selon la revendication 5, caractérisé en ce que l'on réalise, pour la formation du cordon pâteux (33), d'abord un mélange à partir de la résine synthétique introduite (30) et de la poudre de mica, et le cas échéant des autres matériaux de charge et/ou de renforcement qui sont introduits, ce mélange étant amené dans l'extrudeuse (1) en direction de la tuyère d'extrusion (16) et un composant de durcissement (31) étant mélangé à l'intérieur de l'extrudeuse (1).

7. Procédé selon l'une des revendications 1 à 6, caractérisé en ce que, pour la formation du cordon pâteux (33), on introduit la résine synthétique (30) à l'état liquide.

8. Procédé selon l'une des revendications 1 à 7, caractérisé en ce que la résine synthétique introduite (30) est au moins sensiblement exempte de solvant.

9. Procédé selon l'une des revendications 1 à 8, caractérisé en ce que le mélange de résine synthétique durcissable introduit est à base de résine époxy.

10. Procédé selon l'une des revendications 1 à 8, caractérisé en ce que le mélange de résine synthétique introduit est à base de résine polyester.

11. Procédé selon l'une des revendications 1 à 8, caractérisé en ce que le mélange de résine synthétique introduit est à base de résine silicone.

12. Procédé selon l'une des revendications 1 à 11, caractérisé en ce que le cordon pâteux (33) est amené, à l'intervalle de calandrage (19) ou à l'intervalle de la presse à bande, entre deux bandes (28) de matériau plat qui se déroulent.

13. Procédé selon la revendication 12, caractérisé en ce que la couche en forme de bande créée dans la calandre ou dans la presse à bande à partir du cordon pâteux (33), est reliée de façon permanente avec au moins l'une des bandes en matériau plat qui se déroule.

14. Procédé selon la revendication 12, caractérisé en ce que l'on introduit dans l'intervalle de calandrage (19) ou dans l'intervalle de la presse à bande, entre le cordon pâteux et l'une des bandes (28) en matériau plat, encore de façon supplémentaire, une bande texte en fibres (29) qui est reliée de façon permanente à la couche en forme de bande créée dans la calandre ou dans la presse à bande à partir du cordon pâteux (33).

15. Application d'une feuille réalisée par le procédé selon l'une des revendications 1 à 14, caractérisée en ce que l'on utilise la feuille pour l'isolation électrique des bobines de machines électriques, le mélange de résine synthétique contenu dans la feuille étant durci.